# EUROPÄISCHE PATENTSCHRIFT

(11) **EP 3 191 254 B1**
(45) Veröffentlichungstag und Bekanntmachung des Hinweises auf die Patenterteilung: **27.06.2018**
(21) Anmeldenummer: 15734412.8
(22) Anmeldetag: 09.07.2015
(51) Int. Cl.: B23K 37/02, B23K 37/04, B23K 37/047, B23K 26/08, B23K 26/26, B23Q 7/02, B23K 26/361, B23K 101/18, B23K 26/02

(54) **LASER-ABLATIONS- UND SCHWEISSVERFAHREN FÜR WERKSTÜCKE**
LASER ABLATION AND WELDING METHOD FOR WORKPIECES
PROCÉDÉ DE SOUDAGE ET D'ABLATION LASER DE PIÈCES

(30) Priorität: 08.09.2014 DE 102014112888
(43) Veröffentlichungstag der Anmeldung: 19.07.2017
(60) Teilanmeldung: 17184608.2
(73) Patentinhaber: WISCO Lasertechnik GmbH, 88212 Ravensburg (DE)
(72) Erfinder: ALBER, Gerhard, 88276 Berg / Ravensburg (DE)
(74) Vertreter: Otten, Roth, Dobler & Partner mbB Patentanwälte
(86) Internationale Anmeldenummer: PCT/EP2015/065648
(87) Internationale Veröffentlichungsnummer: WO 2016/037728

(56) Entgegenhaltungen:
- EP-A1- 1 529 593
- JP-A- H10 166 159
- US-A1- 2011 240 612

## Beschreibung

Die Erfindung betrifft ein Laser-Ablations- und Schweißverfahren für Werkstücke, insbesondere Bleche, nach dem Verfahrensverlauf des Anspruchs 1.

Im Stand der Technik der DE 10 2010 060 958 A1 sind Anlagen bekannt, bei welchen Werkstücke im Arbeitsbereich eines Lasers positioniert, ausgerichtet und sodann bearbeitet werden. Üblicher Weise werden derartige, im Bezug auf die Ausrichtung der Werkstücke hoch sensible Vorgänge immer in einer spezialisierten Arbeitsstation in der Reihenfolge ausgeführt, dass jeder Bearbeitungsschritt ein Einlegen und Ausrichten des Werkstücks in einer Spannvorrichtung umfasst.

Aus der EP 1 529 593 A1 (Basis des Oberbegriffs des Anspruchs 1) ist ein Präzisions-Herstellungsverfahren zur Herstellung großer Bleche aus kleineren Blechrohlingen bekannt. Aus der US 2011/0240612 A1 kennt man bereits eine Vorrichtung sowie ein Verfahren zum Verschweißen von Werkstücken. Ein Verfahren zum Verschweißen ist auch aus der JP H10 166159 A bekannt.

Nachteilig dabei ist, dass die Entnahme aus einer Bearbeitungsstation, das Einlegen und Positionieren in eine neue Bearbeitungsstation und sodann das Spannen zur Bearbeitung einen erheblichen Handhabungsaufwand mit sich bringt, was die Effizienz einer Bearbeitungsstation erheblich mindert.

Aufgabe der Erfindung ist es daher, die Bearbeitung von Werkstücken in Laser-Bearbeitungsstationen in ihrer Effizienz zu verbessern.

Diese Aufgabe wird durch ein Verfahren nach Anspruch 1 für den Vorgang des Laser-Ablatierens mindestens zweier Werkstücke mit anschließendem Laser-Verschweißen mindestens zweier Werkstücke gelöst.

Vorteilhafte Weiterbildungen sind in den abhängigen Ansprüchen angegeben.

Das Erfindungsgemäße Laser-Ablations- und Schweißverfahren für Werkstücke, insbesondere Bleche, umfasst folgende Verfahrensschritte:
a. Einlegen von mindestens zwei Werkstücken in eine Spanneinheit;
b. spannen der Werkstücke in der Spanneinheit über jeweils ein erstes Spannmittel in einer ersten Position;
c. ausrichten der gespannten Werkstücke und der die Werkstücke spannenden ersten Spannmittel in einer ersten Ablationsposition;
d. Ablation mindestens einer Fügekante mindestens eines gespannten Werkstücks mittels mindestens eines Laserkopf;
e. spannen eines ersten der mindestens zwei Werkstücke über ein zweites Spannmittel in der ersten Position und lösen des ersten Spannmittels an dem ersten der mindestens zwei Werkstücke;
f. versetzen des ersten Spannmittels in Richtung der Fügekante an dem ersten Werkstück;
g. spannen des ersten Werkstücks über das erste Spannmittel, lösen des zweiten Spannmittels und ausrichten des ersten Werkstücks und des ersten Spannmittels in einer Fügeposition;
h. spannen eines zweiten der mindestens zwei Werkstücke über ein zweites Spannmittel in der ersten Position und lösen des ersten Spannmittels an dem zweiten der mindestens zwei Werkstücke;
i. versetzen des ersten Spannmittels in Richtung der/einer Fügekante an dem zweiten Werkstück;
j. spannen des zweiten Werkstücks über das erste Spannmittel, lösen des zweiten Spannmittels und ausrichten des zweiten Werkstücks und des ersten Spannmittels in der/einer Fügeposition;
k. verbinden, insbesondere Laserschweißen der Werkstücke an der jeweiligen Fügekante;
l. lösen der Spannmittel und Übergabe der gefügten Werkstücke an eine Transporteinheit.

Wesentlich ist, dass die Werkstücke nie aus dem Spannmittel entnommen werden müssen, selbst wenn eine Mehrzahl von Bearbeitungsschritten erfolgt, so dass Aufwand zu Handhabung der Werkstücke nahezu gänzlich entfällt.

Nach dem ersten Einlegen von mindestens zwei Werkstücken in eine Spanneinheit verbleiben die Werkstücke in der Spanneinheit bis zur Entnahme nach der Bearbeitung. Im Bearbeitungszyklus erfolgt lediglich eine kontrollierte und definierte Umpositionierung und Ausrichtung der gespannten Werkstücke, ohne dass eine Entnahme erforderlich ist.

Die Bearbeitungsschritte der Ablation und des Schweißens mittels Laser sind dem Fachmann hinreichend bekannt. Der Vollständigkeit halber wird ausgeführt, dass als Laserablation, auch Laserverdampfen genannt, das Abtragen von Material von einer Oberfläche durch Beschuss mit vorzugsweise gepulster Laserstrahlung bezeichnet wird. Die hierbei Verwendung findende Laserstrahlung mit hoher Leistungsdichte führt zur rapiden Erhitzung an der Oberfläche, wodurch Material entfernt wird. Das Schweißen mittels Laser ist ein Schweißverfahren, bei welchem die benötigte Energie zur Verbindung der Werkstücke mittels eines Lasers bereitgestellt wird.

In einer vorteilhaften Weiterbildung des Verfahrens ist vorgesehen, dass vor dem Einlegen ein automatisierter Vorpositionierungsschritt durch eine Übergabe von einem ersten Roboter über eine Positioniervorrichtung auf einen zweiten Roboter ausgeführt wird.

Die Vorpositionierung oder Vorkommissionierung ermöglicht ein Einlegen gleicher oder verschiedener Rohlinge mit erhöhter Präzision in die Spanneinheit, insbesondere durch einen Einlegeroboter mit einem einzelnen Handhabungsgerät (beispielsweise Saugerkopf) für die mindestens zwei Werkstücke. Dadurch wird der erste Ausrichtungsschritt b) erleichtert und kann schneller ausgeführt werden.

Weiterhin ist bevorzugt, dass mindestens ein Ausrichten im Verfahrensschritt c), g) oder j) durch ein Anschwimmen der Werkstücke an einen Anschlag oder dergleichen unter nachfolgender klemmender Fixierung einer jeweiligen Aufhängung der jeweils ersten Spannvorrichtung erfolgt.

Das Anschwimmen zur Positionierung der gespannten Werkstücke erfolgt über Bewegung der Werkstücke in der horizontalen Ebene, ohne dass eine definierte lineare Bewegungsachse vorgegeben ist. Die Werkstücke werden schwimmend, also um eine zur Ebene senkrechte Achse drehbar bzw. schwenkbar, an einen Anschlag angenähert, bis ein Kontakt an mindestens zwei Punkten und damit eine definierte Ausrichtung einer Werkstückkante in der Ebene erfolgt ist. Danach wird die Spannvorrichtung durch ihre Aufhängung in dieser Position fixiert, so dass eine exakte Positionierung in der Ebene erfolgt und gesichert ist.

Überdies ist bevorzugt vorgesehen, dass die Ablation im Verfahrensschritt d) über mindestens zwei Laserköpfen ausgeführt wird, wobei vorzugsweise ein Laserkopf auf einer Werkstückoberseite und ein Laserkopf auf einer Werkstückunterseite angeordnet ist.

Die zumeist flächigen Werkstücke aus Blechabschnitten, sogenannte "blanks", sollen unter Durchführung des erfindungsgemäßen Verfahrens miteinander durch Schweißen verbunden werden. Dazu werden im Verfahren Fügekanten, also Kanten zur Ausbildung der Verbindung durch Ablation vorbehandelt. Unter der Werkstückoberseite und der Werkstückunterseite sind dabei die Flächen der Werkstücke zu verstehen. Üblicher Weise wird die Unterseite zumindest teilweise in Kontakt mit dem ersten Spannmittel sein, während die Oberseite vorzugsweise frei ist.

Die Bearbeitung mit je einem Laserkopf auf der Werksrückoberseite und auf der Werkstückunterseite ermöglicht eine erhöhte Bearbeitungsgeschwindigkeit und vermeidet eine aufwändige Umpositionierung des Laserkopfes von oben nach unten mit präziser Ausrichtung auf die zu bearbeitende Fügekante.

Bei dieser Bearbeitung ist es weiterhin vorteilhaft, wenn die Laserköpfe einander nachfolgend auf einer umlaufenden Bahn die Fügekanten der Werkstücke abfahren, wobei insbesondere zu keinem Zeitpunkt ein direktes Gegenüberstehen der Laserköpfe auf Werkstückoberseite und Werkstückunterseite erfolgt. Durch die einander nachfolgende Bewegung der Laserköpfe auf einer umlaufenden, in der Bearbeitungsebene der Werkstücke liegenden Bahn wird vermieden, dass die Laserköpfe sich gegenseitig beeinflussen, insbesondere die Laserstrahlen des einen Laserkopfes den anderen Laserkopf treffen und diesen dabei beschädigen könnten. Auch die Beeinflussung der Werkstücke selbst durch eine Überbelastung mit Laserstrahlung wird vermieden.

Bevorzugt ist weiterhin vorgesehen, dass zwischen dem Verfahrensschritt d) und e) ein automatisches Reinigen der Fügekante, insbesondere ein Bürsten oder Polieren erfolgt.

Die Reinigung der durch Ablation bearbeiteten Kanten bietet Vorteile für die weitere Bearbeitung. Insbesondere Rückstände von abgetragenem Material oder Verunreinigungen im Fügekantenbereich können dabei nachhaltig entfernt werden, wenn mittels Bürsten oder Polieren die Güte der Fügekanten verbessert wird.

Im Folgenden soll die Erfindung anhand schematischer Ausführungsbeispiele erläutert werden. Die Erfindung ist jedoch nicht auf die dargestellte Ausführungsform beschränkt.

### Es zeigen:

- Figur 1a:: eine Ablations- und Schweißanlage in Draufsicht;
- Figur 1b:: ein Flussdiagramm eines Ablations- und Schweißverfahrens;
- Figur 2a:: eine schematische Darstellung einer Spanneinheit;
- Figur 2b:: eine schematische Darstellung einer Spanneinheit mit Werkstück;
- Figur 3a:: eine schematische Darstellung der Bewegung der Laserköpfe im Ablationsschritt;
- Figur 3b:: eine schematische Darstellung in Längsrichtung der Laserköpfe im Ablationsschritt;
- Figur 4:: Ablauf der Ausrichtung von einer Ablationsposition in eine Fügeposition.

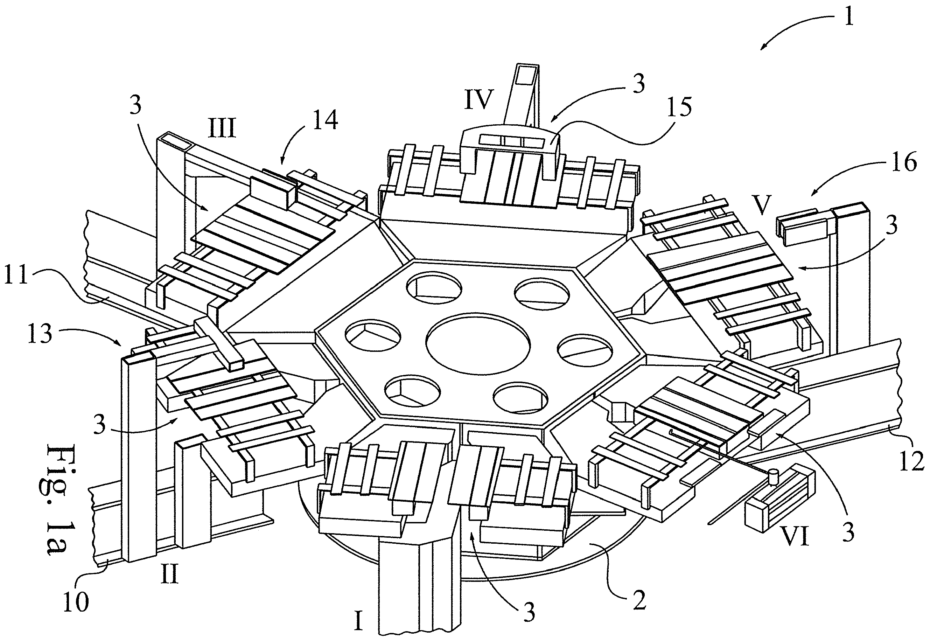

Im Einzelnen zeigt Figur 1a eine Laser-Ablations- und Schweißanlage 1 in perspektivischer Draufsicht. Die Laser-Ablations- und Schweißanlage 1 umfasst einen Drehtisch 2 mit insgesamt sechs angeordneten Spanneinheiten 3 an sechs verschiedenen Bearbeitungspositionen I bis VI. Die Bearbeitungspositionen I bis VI sind umlaufend um die Drehachse 4 angeordnet und können im Bearbeitungstakt über eine Drehung um 60° ineinander übergeführt werden.

An der Bearbeitungsstation II, III sowie V sind Lineartraversen 10, 11 und 12 angeordnet. Auf der Lineartraverse 10 ist eine Laser-Ablationsvorrichtung 13 angeordnet, welche durch Verschiebung auf der Lineartraverse 10 in einen Bereich oberhalb und unterhalb der Spanneinheit 3 in der Position II bewegt werden kann, um den Bearbeitungsschritt der Laser-Ablation durchzuführen.

Die Lineartraverse 11 trägt einen Bearbeitungskopf für den optionalen Vorgang des Reinigens durch Bürsten oder Polieren, wobei auch dieser Vorgang durch Einfahren des Bearbeitungskopfs 14 in den Bereich der Spanneinheit 3 in der Bearbeitungsstation III erfolgt.

In der Station IV ist ein Klemmhalter 15 angeordnet, welcher zur Umpositionierung der ersten Spannmittel die Werkstücke in der Bearbeitungsstation auf der Spanneinheit 3 an Position IV fixiert, um die Ausrichtung der Fügekanten für den nachfolgenden Schweißvorgang in Position V zur Verfügung zu stellen.

An Position V ist die Lineartraverse 12 vorgesehen, welche in entsprechender Weise den Laserschweißkopf 16 linear in den Bearbeitungsbereich der Spanneinheit 3 an der Position V hinein- und herausbewegbar ausgestaltet.

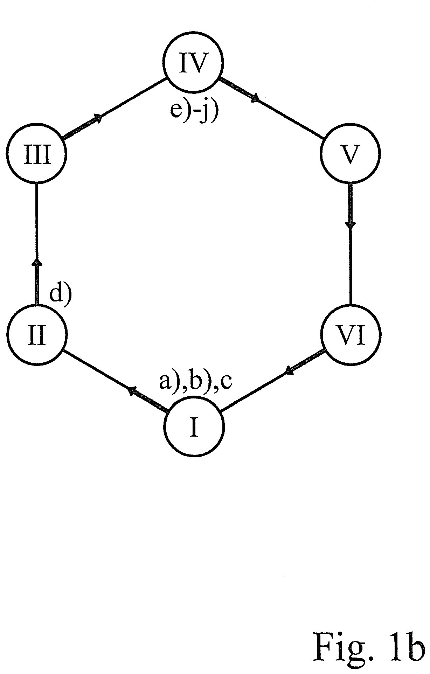

Figur 1b zeigt schematisch den Ablauf des erfindungsgemäßen Bearbeitungsverfahrens entsprechend einer Anordnung auf einem Drehtisch 2 nach Figur 1a. Die Verfahrensschritte a sowie b und c finden in der Position I statt. Sodann wird die Spanneinheit 3 in die Position II zur Bearbeitung in der Ablationsstation 13 durch Drehen des Drehtischs 2 weitergereicht. Dort wird der Verfahrensschritt d ausgeführt. Der optionale Verfahrensschritt der Reinigung wird in Position III vorgenommen, wobei, wie oben beschrieben, ein Bürstenkopf 14 die Fügekanten nach erfolgter Ablation reinigt, insbesondere poliert. Die Anwendung des Bürstenkopfes oder der Poliereinheit kann entweder von oben, von unten oder beidseitig erfolgen.

In Position IV erfolgt ein Umspannen und Ausrichten (Fügen) der behandelten Fügekanten der miteinander zu verschweißenden Werkstücke, wobei die Verfahrensschritte e bis j ausgeführt werden.

Durch weitere Drehung um 60° des Drehtisches 2 wird die Spanneinheit 3 von der Position IV in die Position V überführt, wo sodann das Schweißen der in Fügeposition ausgerichteten Werkstücke mittels des Laserschweißkopfs 16 erfolgt.

Nach Abschluss des Bearbeitungsverfahrens und weiterer Rotation des Drehtisches 2 mit der Spanneinheit 3 aus der Schweißstation V in die Entnahmeposition VI wird die fertig bearbeitete Platine, bestehend aus zwei miteinander verschweißten Werkstücken zur Entladung bereitgestellt.

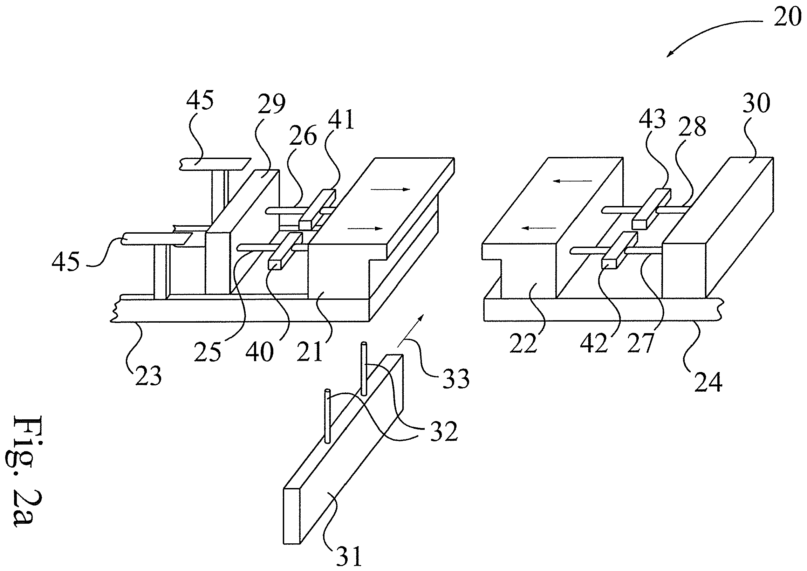

Figur 2a zeigt eine schematische Darstellung einer Spanneinheit 20, welche Spannmittel 21, 22 in Form von Spannmagneten aufweist. Die Spannmittel 21, 22 sind verschiebbar auf einem Rahmen 23, 24 angeordnet und können über jeweils zwei parallele, voneinander beabstandete Gewindespindeln (25,26 und 27,28) schwimmend aufeinander zu- bzw. voneinander wegbewegt werden. Die Gewindespindeln (25 bis 28) werden dabei durch Antriebseinheiten 29, 30 derart angetrieben, dass auf den Spannmitteln 21, 22 gehaltene Werkstücke (nicht dargestellt) aufeinander zubewegt werden können. Zur exakten Positionierung in einer ersten Ablationsposition wird ein Anschlag 31 mit Positionierpins 32 in Richtung 33 zwischen die Spannmittel 21 und 22 mit darauf angeordneten Werkstücken eingebracht, sodass die Fügekanten der Werkstücke schwimmend an die Positionierpins 32 durch Bewegung der Spannmittel 21, 22 über die Gewindespindeln 25 bis 28 angenähert und angeschlagen werden können. Sobald die erste Ablationsposition erreicht ist, werden über Sperrvorrichtungen 40 bis 43 die Positionen der Spannmittel 21, 22 arretiert, sodass bei einer weiteren Bearbeitung der Werkstücke auf der Spanneinheit 20 in einer anderen Bearbeitungsstation (I bis VI) die Positionierung erhalten bleibt, da die Spanneinheit bis zum Abschluss der Bearbeitung mit den Werkstücken in Verbindung bleibt. Alternativ oder ergänzend zu Sperrvorrichtungen besteht auch die Möglichkeit, die Spannmittel über die Antriebseinheiten 29,30 zu fixieren.

Um auch große Werkstücke einfach und präzise aufnehmen und handhaben zu können, weist die Spanneinheit 20 Auflagemittel 45 auf, welche vorliegend nur exemplarisch dargestellt sind.

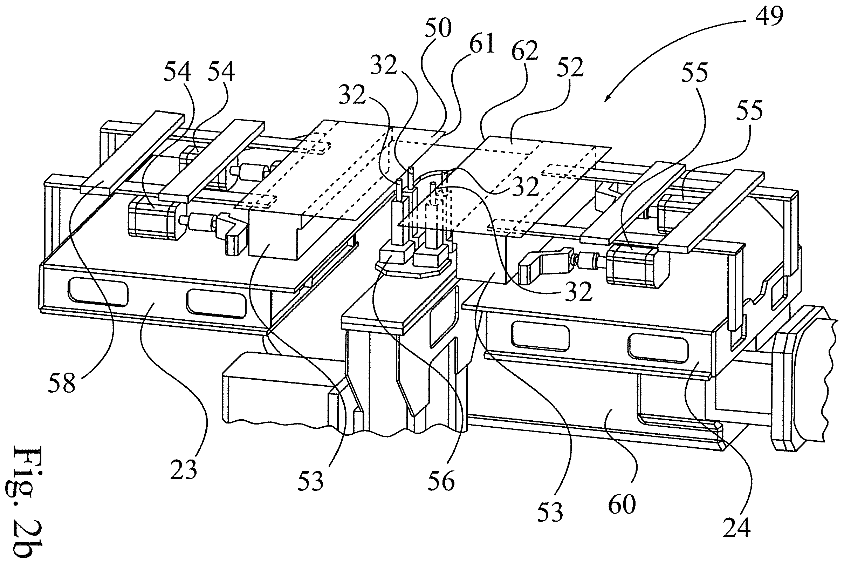

Figur 2b zeigt eine Ausführungsform der Spanneinheit 49 mit angeordneten Werkstücken 50, 51. Die Spannmagnete 52, 53 halten die Werkstücke und werden schwimmend über die Antriebe 54, 55 entsprechend der oben beschriebenen Ausführung an die Anschlagpins 56 angefahren und positioniert. Die Werkstücke 50, 51 sind vorliegend verkürzt dargestellt, sodass die Auflagen 58 sichtbar sind. Die gesamte Spanneinheit 49 ist auf einem Drehtisch 60 gelagert. Ein nicht dargestellter Vorpositionierungsschritt ermöglicht das Einlegen der Werkstücke 50, 51 mittels eines einzigen Roboter-Handhabungsgeräts, beispielsweise einen Sauger-Greifer an einem Mehrachsroboter, sodass bereits in der Vorpositionierung eine verhältnismäßig präzise Ausrichtung der Fügekanten 61, 62 der Werkstücke 50, 51 erfolgt.

Der Vollständigkeit halber ist auszuführen, dass anstatt der Gewindespindeln 25 bis 28 auch andere Vorrichtungen, beispielsweise Linearversteller, Pneumatik- oder Hydraulikversteller oder sonstige Aktuatoren in Frage kommen, die durch entsprechende Anordnung und Fixierung ein Anschwimmen im Sinne der Erfindung ermöglichen. Insbesondere die Verwendung von Pneumatikzylindern kann den zusätzlichen Vorteil bieten, dass über den pneumatischen Steuerdruck eine definierte Kraft beim Anschwimmen ausgeübt werden kann, um die Position möglichst exakt einzustellen, bevor diese mittels Sperrvorrichtungen arretiert wird.

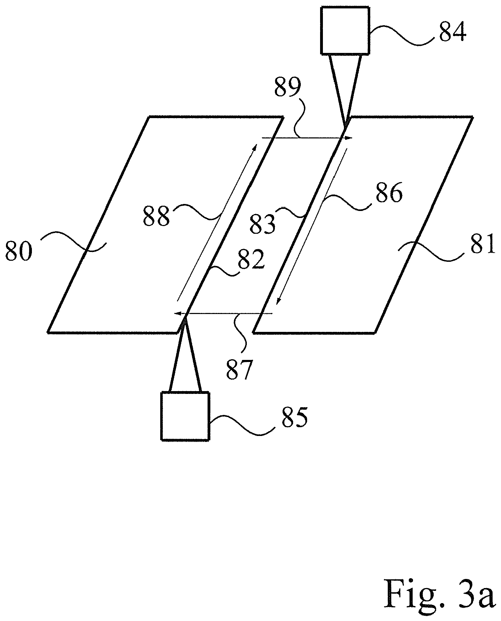

Figur 3a zeigt eine schematische Darstellung der Bewegung der Laserköpfe im Ablationsschritt, wie sie in Anspruch 4 sowie 5 beschrieben ist. Die zwei in Ablationsposition ausgerichteten Werkstücke 80, 81 werden an ihren Fügekanten 82, 83 mittels eines ersten Laserkopfs 84 von ihrer Oberseite sowie eines zweiten Laserkopfs 85 von ihrer Unterseite bearbeitet. Die Laserköpfe laufen dabei entlang der mit Pfeilen 86, 87, 88 sowie 89 beschriebenen Bahn einander nachfolgend die Kontur der Fügekanten 82, 83 ab, sodass der Ablationsschritt erfolgt, ohne dass die Laserköpfe zu einem Bearbeitungszeitpunkt einander gegenüberstehen.

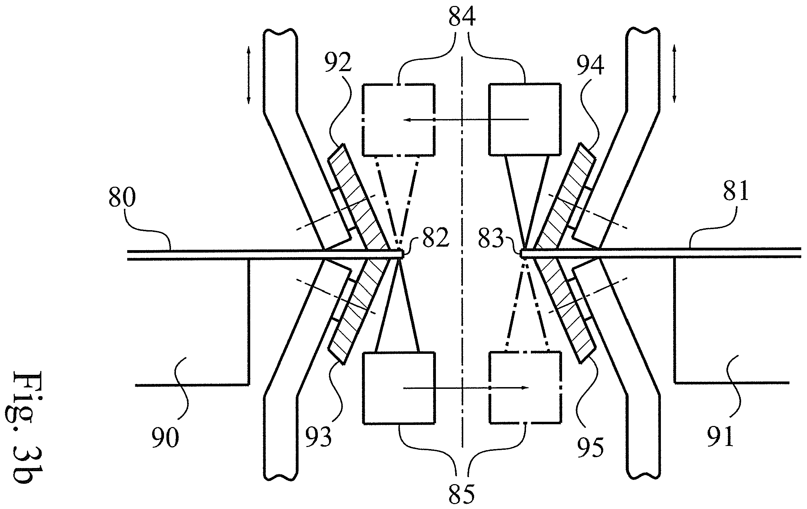

Figur 3b zeigt eine schematische Darstellung in Längsrichtung der Laserköpfe 84 sowie 85, wobei der Laserkopf 84 am Ende der Bahn 86 bereit zum Wechsel entlang der Bahn 87 steht und der Laserkopf 85 den Wechsel entlang der Bahn 89 vornimmt. Die Werkstücke 80, 81 werden durch Spannmagnete 90, 91 gehalten, wobei zur verbesserten Präzision der Bearbeitung an der Fügekante 82, 83 mit den Laserköpfen 84, 85 mitgeführte Rollenpaare 92, 93 sowie 94, 95 bewegt werden, um die Fügekanten 82, 83 exakt in ihrer Bearbeitungsposition in vertikaler Ausrichtung zu halten.

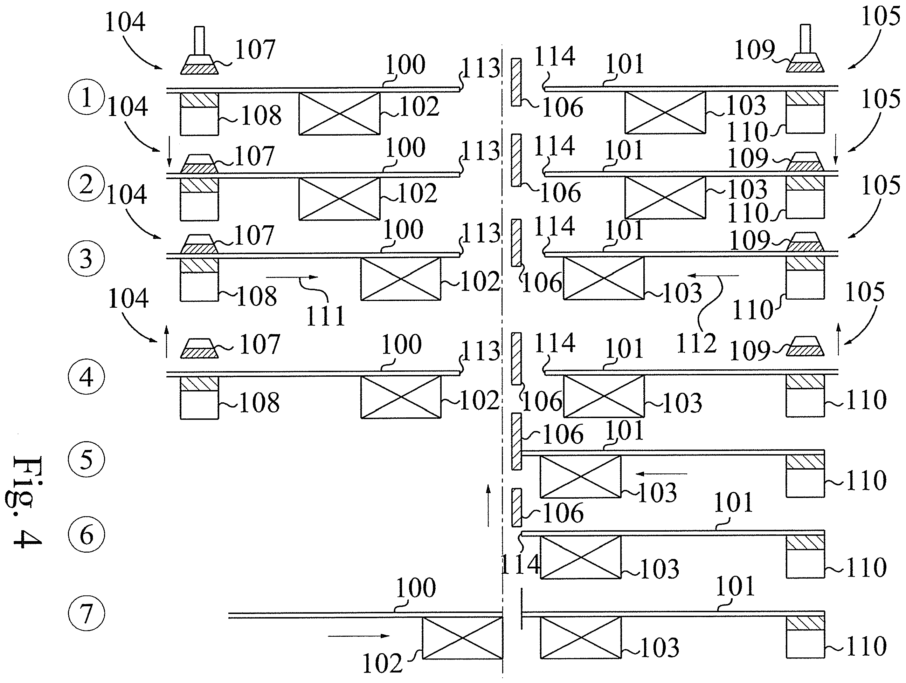

Figur 4 den Ablauf in sieben Schritten der Versetzung des ersten Spannmittels gemäß den Merkmalen e) bis j) des erfindungsgemäßen Verfahrens.

Die Werkstücke 100 sowie 101 werden in die Station IV eingefahren und sind zu diesem Zeitpunkt mit den ersten Spannmitteln 102 sowie 103 in Form von Spannmagneten gehalten. Die zweiten Spannmittel 104 sowie 105 sind zu diesem Zeitpunkt geöffnet und üben keine Spannkraft auf die Werkstücke 100, 101 aus. Nach Einbringung in die Station IV wird ein Anschlag 106 eingebracht. In einem zweiten Schritt des Ablaufs in der Station IV werden die zweiten Spannmittel 104, 105 durch Schließen einer oberen Spannbacke 107 gegen einen unteren Spannbock 108 im Bereich des ersten Werkstücks 100 sowie Schließen einer oberen Spannbacke 109 gegen einen unteren Spannbock 110 im Bereich des Werkstücks 101 geschlossen. Sodann werden die ersten Spannmittel 102 sowie 103 gelöst und entlang einer Bewegungsrichtung 111 sowie 112 auf den Anschlag 106 zubewegt. Dies kann über die bereits vorab beschriebenen Antriebe zum Anschwimmen einer Position erfolgen. Die zweiten Spannmittel 104 sowie 105 halten dabei die Werkstücke 100 sowie 101 in Position.

Nach Abschluss der Bewegung der ersten Spannmittel 102 sowie 103 im Schritt Nr.4 werden die zweiten Spannmittel 104, 105 gelöst, nachdem die ersten Spannmittel 102, 103 die Werkstücke 100, 101 wieder gesichert gespannt haben, indem das Magnetfeld der Spannmagnete aktiviert wurde. Im Schritt Nr.5 erfolgt sodann ein erstes Anfahren des Werkstücks 101 über Bewegung des Spannmittels 103 mit gespanntem Werkstück 101 an den Anschlag 106 zur Ausrichtung in einer Fügeposition für einen anschließenden Schweißschritt. Im Schritt Nr.6 wird der Anschlag 106 sodann entfernt, wonach im Schritt Nr.7 über Bewegung des ersten Spannmittels 102 mit darauf fixiertem Werkstück 100 dieses Werkstück 100 mit seiner Fügekante 113 auf Anschlag an die Fügekante 114 des zweiten Werkstücks 101 angefahren wird. Sodann werden die Positionen der ersten Spannmittel 102 sowie 103 in bekannter Weise verriegelt und die Spanneinheit in die Laser-Bearbeitungsstation V eingebracht, damit die Werkstücke 100, 101 miteinander verschweißt werden können.

Nach erfolgtem Verschweißen wird das resultierende, bearbeitete Werkstück in die Position VI zur Entladung, beispielsweise durch einen Entladeroboter überführt, wonach die Spanneinheit zur erneuten Beladung und ersten Ausrichtung in die Position I weitergedreht werden kann.

Das erste und das zweite Spannmittel können auch anders als in den Ausführungsbeispielen beschrieben ausgebildet sein. Insbesondere kann das zweite Spannmittel aus einer stationären Anordnung von Spannbacken in der Station IV. und einem mitbewegten Spannbock, beispielsweise in Form der Auflage 45, 58 bestehen.

### BEZUGSZEICHENLISTE

- 1: Anlage
- 2: Drehtisch
- 3: Spanneinheit
- 10: Lineartraverse
- 11: Lineartraverse
- 12: Lineartraverse
- 13: Laser-Ablationsvorrichtung
- 14: Bearbeitungskopf
- 15: Klemmhalter
- 16: Laserschweißkopf
- 20: Spanneinheit
- 21: Spannmittel
- 22: Spannmittel
- 23: Rahmen
- 24: Rahmen
- 25 - 28: Gewindespindel
- 29: Antriebseinheit
- 30: Antriebseinheit
- 32: Positionierpin
- 33: Richtung
- 40 - 43: Sperrvorrichtung
- 45: Auflagemittel
- 49: Spanneinheit
- 50: Werkstück
- 51: Werkstück
- 52: Spannmagnet
- 53: Spannmagnet
- 54: Antrieb
- 55: Antrieb
- 60: Drehtisch
- 61: Fügekante
- 62: Fügekante
- 80: Werkstück
- 81: Werkstück
- 82: Fügekante
- 83: Fügekante
- 84: Laserkopf
- 85: Laserkopf
- 86 - 89: Bahn
- 90: Spannmagnet
- 91: Spannmagnet
- 92 - 95: Rollenpaar
- 100: Werkstück
- 101: Werkstück
- 102: Spannmittel
- 103: Spannmittel
- 104: Spannmittel
- 105: Spannmittel
- 106: Anschlag
- 107: obere Spannbacke
- 108: unterer Spannbock
- 109: obere Spannbacke
- 110: unterer Spannbock
- 111: Bewegungsrichtung
- 112: Bewegungsrichtung
- 113: Fügekante
- 114: Fügekante

## Patentansprüche

1. Laser-Ablations- und Schweißverfahren für Werkstücke (50, 51, 80, 81, 100, 101), insbesondere Bleche, wobei das Verfahren folgende Verfahrensschritte umfasst:
a. Einlegen von mindestens zwei Werkstücken (50, 51, 80, 81, 100, 101) in eine Spanneinheit (3, 20, 49);
b. spannen der Werkstücke (50, 51, 80, 81, 100, 101) in der Spanneinheit (3, 20, 49) über jeweils ein erstes Spannmittel (102, 103) in einer ersten Position;
c. ausrichten der gespannten Werkstücke (50, 51, 80, 81, 100, 101) und der die Werkstücke (50, 51, 80, 81, 100, 101) spannenden ersten Spannmittel (102, 103) in einer ersten Ablationsposition;
d. Ablation mindestens einer Fügekante (61, 62, 82, 83, 113, 114) mindestens eines gespannten Werkstücks (50, 51, 80, 81, 100, 101) mittels mindestens eines Laserkopf (84, 85);
**gekennzeichnet durch** folgende Verfahrensschritte :
e. spannen eines ersten der mindestens zwei Werkstücke (50, 51, 80, 81, 100, 101) über ein zweites Spannmittel (104, 105) in der ersten Position und lösen des ersten Spannmittels (102, 103) an dem ersten der mindestens zwei Werkstücke (50, 51, 80, 81, 100, 101);
f. versetzen des ersten Spannmittels (102, 103) in Richtung der Fügekante (61, 62, 82, 83, 113, 114) an dem ersten Werkstück;
g. spannen des ersten Werkstücks über das erste Spannmittel (102, 103), lösen des zweiten Spannmittels (104, 105) und ausrichten des ersten Werkstücks und des ersten Spannmittels (102, 103) in einer Fügeposition;
h. spannen eines zweiten der mindestens zwei Werkstücke (50, 51, 80, 81, 100, 101) über ein zweites Spannmittel in der ersten Position und lösen des ersten Spannmittels (102, 103) an dem zweiten der mindestens zwei Werkstücke (50, 51, 80, 81, 100, 101);
i. versetzen des ersten Spannmittels (102, 103) in Richtung der/einer Fügekante (61, 62, 82, 83, 113, 114) an dem zweiten Werkstück;
j. spannen des zweiten Werkstücks über das erste Spannmittel (102, 103), lösen des zweiten Spannmittels (104, 105) und ausrichten des zweiten Werkstücks und des ersten Spannmittels (102, 103) in der/einer Fügeposition;
k. verbinden, insbesondere Laserschweißen der Werkstücke (50, 51, 80, 81, 100, 101) an der jeweiligen Fügekante (61, 62, 82, 83, 113, 114);
l. lösen der Spannmittel (21, 22, 102, 103, 104, 105) und Übergabe der gefügten Werkstücke (50, 51, 80, 81, 100, 101)an eine Transporteinheit.

2. Verfahren nach Anspruch 1, **dadurch gekennzeichnet, dass** vor dem Einlegen ein automatisierter Vorpositionierunsschritt durch eine Übergabe von einem ersten Roboter über eine Positioniervorrichtung auf einen zweiten Roboter ausgeführt wird.

3. Verfahren nach Anspruch 1 oder 2, **dadurch gekennzeichnet, dass** mindestens ein Ausrichten im Verfahrensschritt c), g) oder j) durch ein Anschwimmen der Werkstücke (50, 51, 80, 81, 100, 101) an einen Anschlag (106) oder dergleichen unter nachfolgender klemmender Fixierung einer jeweiligen Aufhängung der jeweils ersten Spannvorrichtung (102, 103) erfolgt.

4. Verfahren nach einem der vorhergehenden Ansprüche, **dadurch gekennzeichnet, dass** die Ablation im Verfahrensschritt d) über mindestens zwei Laserköpfen (84, 85) ausgeführt wird, wobei vorzugsweise ein Laserkopf auf einer Werkstückoberseite und ein Laserkopf auf einer Werkstückunterseite angeordnet ist.

5. Verfahren nach Anspruch 4, **dadurch gekennzeichnet, dass** die Laserköpfe (84, 85) einander nachfolgend auf einer umlaufenden Bahn die Fügekanten (61, 62, 82, 83, 113, 114) der Werkstücke (50, 51, 80, 81, 100, 101) abfahren, wobei insbesondere zu keinem Zeitpunkt ein direktes Gegenüberstehen der Laserköpfe (84, 85) auf Werkstückoberseite und Werkstückunterseite erfolgt.

6. Verfahren nach einem der vorangegangenen Ansprüche, **dadurch gekennzeichnet, dass** zwischen dem Verfahrensschritt d) und e) ein automatisches Reinigen der Fügekante (61, 62, 82, 83, 113, 114), insbesondere ein Bürsten oder Polieren erfolgt.

## Claims

1. Laser ablation and welding method for workpieces (50, 51, 80, 81, 100, 101), in particular metal sheets, wherein the method comprises the following method steps:
a. inserting at least two workpieces (50, 51, 80, 81, 100, 101) into a clamping unit (3, 20, 49);
b. clamping the workpieces (50, 51, 80, 81, 100, 101) in the clamping unit (3, 20, 49) via one first clamping means (102, 103) each in a first position;
c. aligning the clamped workpieces (50, 51, 80, 81, 100, 101) and the first clamping means (102, 103), which clamp the workpieces (50, 51, 80, 81, 100, 101), in a first ablation position;
d. ablation of at least one joining edge (61, 62, 82, 83, 113, 114) of at least one clamped workpiece (50, 51, 80, 81, 100, 101) by means of at least one laser head (84, 85);
**characterized by** the following method steps:
e. clamping a first of the at least two workpieces (50, 51, 80, 81, 100, 101) via a second clamping means (104, 105) in the first position and disengaging the first clamping means (102, 103) at the first of the at least two workpieces (50, 51, 80, 81, 100, 101);
f. moving the first clamping means (102, 103) in the direction of the joining edge (61, 62, 82, 113, 114) at the first workpiece;
g. clamping the first workpiece via the first clamping means (102, 103), disengaging the second clamping means (104, 105), and aligning the first workpiece and the first clamping means (102, 103) in a joining position;
h. clamping a second of the at least two workpieces (50, 51, 80, 81, 100, 101) via a second clamping means in the first position and disengaging the first clamping means (102, 103) at the second of the at least two workpieces (50, 51, 80, 81, 100, 101);
i. moving the first clamping means (102, 103) in the direction of the/one joining edge (61, 62, 82, 83, 113, 114) at the second workpiece;
j. clamping the second workpiece via the first clamping means (102, 103), disengaging the second clamping means (104, 105), and aligning the second workpiece and the first clamping means (102, 103) in the/one joining position;
k. connecting, in particular laser welding the workpieces (50, 51, 80, 81, 100, 101) at the respective joining edge (61, 62, 82, 83, 113, 114);
1. disengaging the clamping means (21, 22, 102, 103, 104, 105) and transferring the joined workpieces (50, 51, 80, 81, 100, 101) to a transport unit.

2. Method according to Claim 1, **characterized in that**, before the insertion, an automated pre-positioning step is executed by a transfer from a first robot via a positioning device to a second robot.

3. Method according to Claim 1 or 2, **characterized in that** at least one alignment in method step c), g), or j) is performed by a movement in a floating manner of the workpieces (50, 51, 80, 81, 100, 101) toward a stop (106) or the like with subsequent clamping fixation of a respective suspension of the respective first clamping device (102, 103).

4. Method according to any one of the preceding claims, **characterized in that** the ablation in method step d) is executed via at least two laser heads (84, 85), wherein preferably one laser head is arranged on a workpiece upper side and one laser head is arranged on a workpiece lower side.

5. Method according to Claim 4, **characterized in that** the laser heads (84, 85) travel down the joining edges (61, 62, 82, 83, 113, 114) of the workpieces (50, 51, 80, 81, 100, 101) successively on a circumferential path, wherein in particular the laser heads (84, 85) are not directly diametrically opposite on workpiece upper side and workpiece lower side at any point in time.

6. Method according to any one of the preceding claims, **characterized in that** automatic cleaning of the joining edge (61, 62, 82, 83, 113, 114), in particular brushing or polishing, is performed between method step d) and e).

## Revendications

1. Procédé d'ablation et de soudage au laser pour des pièces (50, 51, 80, 81, 100, 101), en particulier des feuilles, dans lequel le procédé comprend les étapes de procédé suivantes :
a. charger au moins deux pièces (50, 51, 80, 81, 100, 101) dans une unité de serrage (3, 20, 49) ;
b. serrer les pièces (50, 51, 80, 81, 100, 101) dans l'unité de serrage (3, 20, 49) au moyen d'un premier dispositif de serrage (102, 103) respectif à une première position ;
c. aligner les pièces serrées (50, 51, 80, 81, 100, 101) et les premiers moyens de serrage (102, 103) serrant les pièces (50, 51, 80, 81, 100, 101) à l'aide d'un premier dispositif de serrage (50, 51, 80, 81, 100, 101) à une première position d'ablation ;
d. effectuer l'ablation d'au moins une arête de jonction (61, 62, 82, 83, 113, 114) d'au moins une pièce serrée (50, 51, 80, 81, 100, 101) au moyen d'au moins une tête laser (84, 85) ;
**caractérisé par** les étapes de procédé suivantes :
e. serrer une première des au moins deux pièces (50, 51, 80, 81, 100, 101) par l'intermédiaire d'un second dispositif de serrage (104, 105) à la première position et desserrer le premier dispositif de serrage (102, 103) sur la première desdites au moins deux pièces (50, 51, 80, 81, 100, 101) ;
f. déplacer le premier dispositif de serrage (102, 103) dans la direction de l'arête de jonction (61, 62, 82, 83, 113, 114) sur la première pièce ;
g. serrer la première pièce sur le premier moyen de serrage (102, 103), desserrer le second moyen de serrage (104, 105) et aligner la première pièce et le premier moyen de serrage (102, 103) à une position de jonction ;
h. serrer une deuxième desdites au moins deux pièces (50, 51, 80, 81, 100, 101) par l'intermédiaire d'un second dispositif de serrage à la première position et desserrer le premier dispositif de serrage (102, 103) sur la seconde desdites au moins deux pièces (50, 51, 80, 81, 100, 101) ;
i. déplacer le premier moyen de serrage (102, 103) dans la direction de l'arête ou d'une arête de jonction (61, 62, 82, 83, 113, 114) sur la seconde pièce ;
j. serrer la seconde pièce sur le premier moyen de serrage (102, 103), desserrer le second moyen de serrage (104, 105) et aligner la seconde pièce et le premier moyen de serrage (102, 103) à la/une position de jonction ;
k. relier, en particulier souder au laser les pièces (50, 51, 80, 81, 100, 101) sur l'arête de jonction respective (61, 62, 82, 83, 113, 114) ;
1. desserrer les moyens de serrage (21, 22, 102, 103, 104, 105) et transférer les pièces jointes (50, 51, 80, 81, 100, 101) à une unité de transport.

2. Procédé selon la revendication 1, **caractérisé en ce qu'**avant le chargement, une étape de prépositionnement automatisée est effectuée par passage, par l'intermédiaire d'un dispositif de positionnement, d'un premier robot à un second robot.

3. Procédé selon la revendication 1 ou 2, **caractérisé en ce qu'**au moins un alignement réalisé à l'étape de procédé c), g) ou j) est effectué en faisant flotter les pièces (50, 51, 80, 81, 100, 101) jusqu'à une butée (106) ou similaire et en fixant ensuite par serrage une suspension respective du premier dispositif de serrage respectif (102, 103).

4. Procédé selon l'une des revendications précédentes, **caractérisé en ce que** l'ablation est effectuée à l'étape de procédé d) par l'intermédiaire d'au moins deux têtes laser (84, 85), dans lequel une tête laser est de préférence disposée sur une face supérieure de la pièce et une tête laser est disposée sur une face inférieure de la pièce.

5. Procédé selon la revendication 4, **caractérisé en ce que** les têtes laser (84, 85) parcourent successivement les arêtes de jonction (61, 62, 82, 83, 113, 114) des pièces (50, 51, 80, 81, 100, 101) sur un trajet périphérique, dans lequel les têtes laser (84, 85) ne se trouvent en particulier à aucun moment directement en face l'une de l'autre sur la face supérieure de la pièce et sur la face inférieure de la pièce.

6. Procédé selon l'une des revendications précédentes, **caractérisé en ce qu'**entre les étapes de procédé d) et e), un nettoyage automatique de l'arête de jonction (61, 62, 82, 83, 113, 114) est effectué, en particulier un brossage ou un polissage.
